# EUROPEAN PATENT APPLICATION

(11) **EP 1 369 827 A2**
(43) Date of publication of application: **10.12.2003**
(21) Application number: 03076598.6
(22) Date of filing: 26.05.2003
(51) Int. Cl.: G07F 7/00, G03D 15/00, G07F 17/42

(54) **System and method for providing a customized imaging product or service**

(30) Priority: 06.06.2002 US 163539
(71) Applicant: EASTMAN KODAK COMPANY, Rochester, New York 14650 (US)
(72) Inventor: Manico, Joseph A, Rochester, New York 14650-2201 (US); Hodder, David A., Rochester, New York 14650-2201 (US); Mclntyre, Dale F., Rochester, New York 14650-2201 (US); Fredlund, John R., Rochester, New York 14650-2201 (US)
(74) Representative: Haile, Helen Cynthia

(57) **Abstract**

A system and method for providing a customized imaging product. In a preferred embodiment, the system comprises an input device for providing custom information; a radio-frequency device for encoding the custom information in a radio-frequency identification transponder disposed on or within an imaging product to produce the customized imaging product; and a delivery section for dispensing the customized imaging product to a user.

## Description

The present invention relates generally to photography and film units. More particularly, the present invention relates to the automated vending of customized photographic products and services.

Vending kiosks, also typically referred to as vending machines, are well known for the automated dispensing of a product. Vending kiosks can operate autonomously and accept payment with cash or credit/debit cards.

Various products can be dispensed from vending kiosks, including photographic products. An example of a vending kiosk dispensing a photographic product is the "Kodak Max Vending Machine" which dispenses photographic products provided by Eastman Kodak Company, for example, photographic film, one time use cameras (OTUCs), and pre-paid film processing mailers.

U.S. Patent Nos. 5,923,906 *(Zander),* 5,963,752 *(Zander),* 5,991,548 *(Zander),* 6,038,401 *(Zander),* all commonly assigned and incorporated herein by reference, describe an apparatus and method for loading of film into and/or vending of photographic cameras.

U.S. Patent No. 5,113,351 *(Bostic)* describes an automated, interactive system for products which must be processed.

However, vending kiosks typically dispense products. That is, while pre-paid film developing mailers can be purchased using the vending kiosk, vending kiosks are not designed to accept/receive exposed film for processing.

Film drop boxes are well known. Film drop boxes are typically located at a retail location such as a mass/food/drug store. A user typically fills out a photofinishing service request form printed on a film processing envelope with user information (e.g., name, address, phone number, etc.) along with photofinishing information (e.g., the type of film that is to be processed, the type of output products that are requested such as prints, Picture CD's, Photonet Online, etc.). The user then places the film in the envelope and places the envelope into a film drop box or gives it to a retail clerk. The envelope is then transferred to a film processing laboratory, where the film is processed and the order completed.

Typically the user must return to the same retail location (i.e., where the film was placed in the film drop box) to retrieve the completed order. If at any point along the way between the film drop box, retail clerk, and the various equipment and sorting stations within film processing laboratory, the film is accidentally separated form the envelope, the user's images may be lost.

With the Advanced Photo System (APS), each roll of film has a unique ID number that the user can manually transcribe to the film processing envelope, but most users are unaware of this capability. In addition, manual transcription is time consuming, inconvenient and prone to transcription errors.

Custom machine readable "bar codes" and other similar printed data encoding methods can be used to label and identify film with user identification and service requirements. However, these custom printed systems of identification require mechanical label printers that are prone to jamming, require routine refilling of label stock, have a limited data volume capacity, and usually include no closed loop check to verify that the label was correctly printed. In addition, any label and printed information on the external surface of a roll of film could be easily damaged or removed resulting in the loss of linkage back to the original user.

Typically imaging systems such as kiosks (for example, the Kodak Picture Maker manufactured by Eastman Kodak Company) provide for the scanning of prints and creating reprints and enlargements. Kiosks can also make prints and enlargements from film images, if equipped with a film scanner, and from digital camera cards if equipped with a camera card reader. The kiosk can also be used to add decorative borders and text and do other manipulations to the image to increase its value. It is known to network imaging systems such as kiosks. A networked kiosk is able to send and receive digital files from a remote location.

Accordingly, while such apparatus may have achieved certain degrees of success in their particular applications, a need continues for a system and method to overcome the aforementioned problems. In particular, a need continues to exist for a vending machine adapted to distribute imaging products and services customized to an individual.

An object of the present invention is to provide a system and method of generating a customized imaging product for a user, and providing the customized imaging product to the user.

These objects are given only by way of illustrative example. Thus, other desirable objectives and advantages inherently achieved by the disclosed invention may occur or become apparent to those skilled in the art. The invention is defined by the appended claims.

According to one aspect of the present invention, there is provided a system for generating a customized imaging product. The system comprises input means for providing custom information; means for customizing an imaging product to generate the customized imaging product in accordance with the custom information; and a delivery section for dispensing the customized imaging product.

According to another aspect of the present invention, there is provided a system comprising an input device for providing custom information; a radio-frequency device for encoding the custom information in a radio-frequency identification transponder disposed on or within an imaging product to produce the customized imaging product; and a delivery section for dispensing the customized imaging product to a user.

According to yet another aspect of the present invention, there is provided a method for providing a customized imaging product. The method comprises the steps of providing an imaging product; providing custom information; modifying the imaging product using the custom information to generate the customized imaging product; and delivering the customized imaging product.

The present invention provides a system and method of generating a customized imaging product for a user, and providing the customized imaging product to the user.

The foregoing and other objects, features, and advantages of the invention will be apparent from the following more particular description of the preferred embodiments of the invention, as illustrated in the accompanying drawings.
FIG. 1 shows a schematic view of an embodiment of a camera having a radio-frequency identification transponder with the positions of a film unit and transponder being indicated by dashed lines.
FIG. 2 shows a schematic view illustrating use of the transponder in the camera of FIG. 1.
FIG. 3 shows a front view of a kiosk in accordance with the present invention.
FIG. 4 shows a cross-sectional view of a kiosk to show the interior of the kiosk in accordance with the present invention.
FIGS. 5(a)-(d) show a camera being customized in the customization area of the kiosk.
FIG. 6 shows a flow diagram of a first method in accordance with the present invention for providing a customized imaging product.
FIGS. 7(a) and (b) show the kiosk in communication with a remote location by means of a communication network or wireless communication, respectively.
FIG. 8 shows the kiosk of FIG. 3 having a receiving area for receiving a customized imaging product.
FIGS. 9(a)-(h) show a customized camera being received by the kiosk.
FIG. 10 shows a flow diagram of a second method in accordance with the present invention for providing a customized imaging product and service.
FIGS. 11(A)-(B) show a flow diagram more particularly describing the first and second method in accordance with the present invention.
FIG. 12 shows a flow diagram more particularly describing the method of selecting an imaging product and the personalization of the imaging product.
FIG. 13 shows a flow diagram more particularly describing the method of obtaining the imaging service.

The following is a detailed description of the preferred embodiments of the invention, reference being made to the drawings in which the same reference numerals identify the same elements of structure in each of the several figures.

The present invention provides a system and method of providing a personalized or customized imaging product or service. More particularly, the present invention employs a radio-frequency identification transponder disposed on an imaging product, such as a camera or roll of photographic film, wherein the transponder is programmed with customized information. That is, information which is custom or personal or specific to a particular user/purchaser.

Radio-frequency identification transponders are well known and are widely available in a variety of forms. These RF transponders include a non-volatile memory, such as an EEPROM (Electrically Erasable Programmable Read-Only Memory) semiconductor component integrally contained in the transponder. Stored in the non-volatile memory are encoded data. Inlay transponders are identification transponders that have a substantially flat shape. The antenna for an inlay transponder is in the form of a conductive trace deposited on a non-conductive support. The antenna has the shape of a flat coil or the like. Leads for the antenna are also deposited, with non-conductive layers interposed as necessary. Memory and any control functions are provided by a chip mounted on the support and operatively connected through the leads to the antenna. Inlay transponders have been used as layers of identification tags and labels to provide encodements that are accessible at a distance.

U.S. Patent No. 6,381,416 B2 *(Manico),* commonly assigned and incorporated herein by reference, discloses a film unit comprising a radio-frequency identification transponder.

U.S. Patent No. 6,173,119 B1 *(Manico),* commonly assigned and incorporated herein by reference, discloses a camera having a radio-frequency identification transponder.

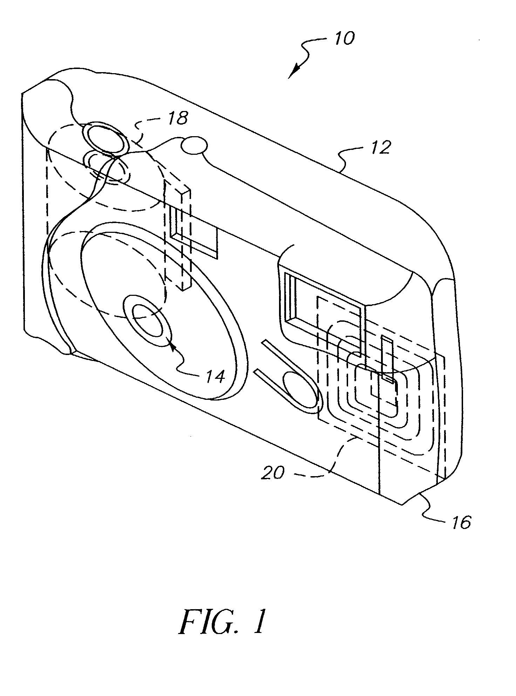

Referring to Figure 1, a camera 10 has a body 12 having an image capture assembly 14 disposed in a casing 16. During use, a film unit or image capture unit 18 is disposed in the body 12 in operative relation to the image capture assembly 14.

For convenience, the camera 10 is generally discussed herein in terms of a film unit 18 including photographic film, but it will be understood that the term "image capture unit 18" or "film unit 18" is broadly defined and is inclusive of a camera 10 having a film unit 18 that stores information in digital form using electronic, or magnetic, or optical memory or the like.

Camera 10 comprises a radio-frequency (RF) identification transponder 20. As illustrated in Figure 1, body 12 holds radio-frequency identification transponder 20. However, radio-frequency identification transponder 20 can be positioned in a variety of locations on camera 10. For example, transponder 20 can be held by film unit 18, either external or internal to film unit 18. Still further, camera 10 can comprise more than one transponder 20. For example, a first transponder can be held by body 12 while a second transponder is held by film unit 18, or alternatively, body 12 can hold two transponders. The first and second transponder can store the same or different encodements, and be independently or commonly accessible by a radio frequency.

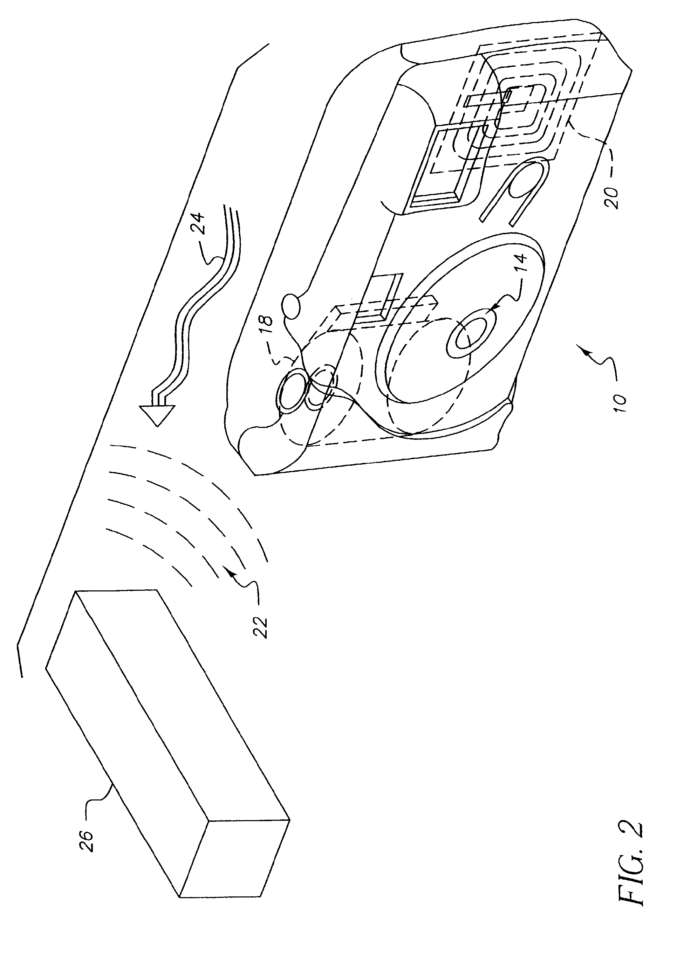

The term "radio-frequency identification transponder" is used herein to refer to any of a class of compact radio receiver-transmitters which are powered by an ambient radio-frequency field (indicated by line pattern 22 in Figure 2). Generally, transponder 20 is accessed by modulating the field 22 with an appropriate communication signal. The transponder 20 reacts (indicated by arrow 24 in Figure 2), responsive to the communication signal. The communication signal 22 is generated and the encodement is detected by a communication unit or transceiver 26. It is noted that in order to access from or provide information to transponder 20, no physical contact with the read/write device is required. Other systems which require physical contact are prone to wear, such as at the electrical contact points, or require physical securement to these points. Further, because of the physical contact requirement, the shape/design of a product incorporating a memory device requires that the contact portion be accessible to the read/write device.

A dispensing unit, such as a kiosk, a vending system, or automated machine, is provided to customize camera 10 and dispense the customized camera to a user, wherein the camera is customized by programming the transponder 20 with information specific to the user. As such, the present invention relates to a system for providing a customized imaging product. Such dispensing units are intended to operate autonomously, and can be a free-standing unit located at a retail or non-retail location, or a unit located as a component of architecture (such as mounted within a wall). A user can interact with the dispensing unit either in an indoor and outdoor environment, and either walk-up or drive-through.

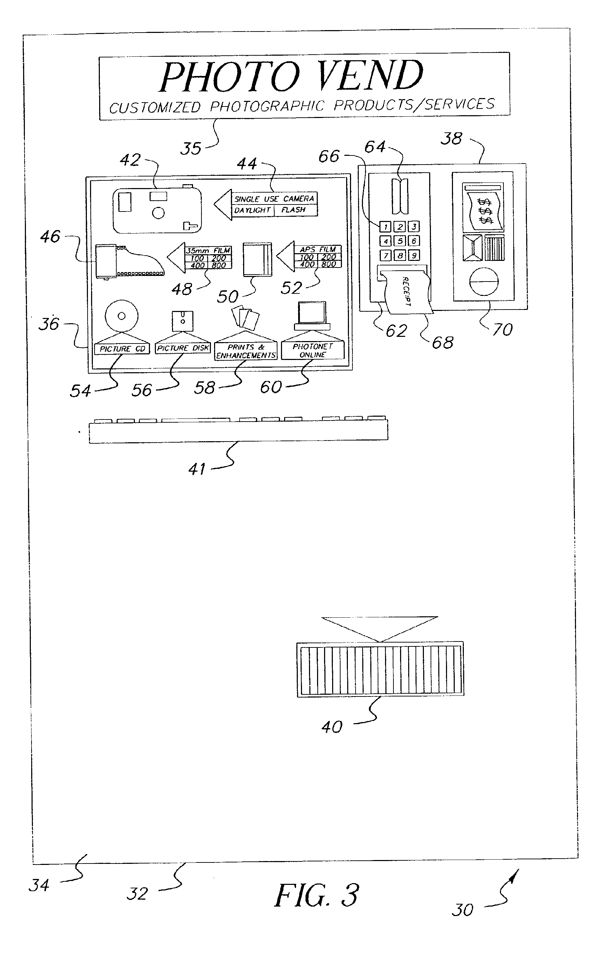

An exemplary dispensing unit is generally illustrated in Figure 3 as kiosk 30 for dispensing imaging products, such as photosensitive film, an image capture device, digital camera, a single use camera, a compact disc, a memory card, a floppy disc, a removable hard drive, or the like. For ease of discussion, camera 10 will be used as the imaging product selected by a user to be customized and dispensed from kiosk 30 though it is recognized that one or more imaging products can be dispensed from kiosk 30.

As illustrated, kiosk 30 includes a body 32 having a display side 34 providing an interface with the user/operator/purchaser/customer of imaging products dispensed from kiosk 30. The interface includes an input device/means for obtaining information from the user as well as providing information or instructions to the user. As illustrated in Figure 3, the input means of display side 34 comprises a monitor or display 35, a selection area 36 defining imaging product features, a payment area 38, a delivery area 40, and an input device 41.

Display 35 provides an area for displaying information, such as instructions or advertisements or the like, to communicate with the user. As illustrated in Figure 3, display 35 is displaying as an advertisement for the kiosk.

Selection area 36 displays products and/or services from which the user can select. Icons, text, symbols, images, or other graphical indicators can be used to represent the products/services. For example, as illustrated in Figure 3, an icon 42 of a camera is displayed along with textual information 44 of camera features which can be selected (i.e., one-time-use-camera, flash, no flash). An icon 46 of a 35mm roll of film is displayed along with textual information 48 of film features which can be selected (i.e., 35mm, ASA number). An icon 50 of an APS roll or film is displayed along with textual information 52 of film features which can be selected (i.e., APS, ASA number). Similarly, icon 54 represents a Picture CD product, icon 56 represents a Picture Disk product, icon 58 represents a service of prints/enlargements, while icon 60 represents Photonet On-line, a service wherein images are stored digitally on a server which can be accessed through the internet. Other imaging products and/or services can be similarly represented in selection area 36, including photosensitive film format, film speed, illumination means, number of exposures, film type including color, black/white, color negative or reversal, memory size, memory type, digital resolution, number of images, zoom, water resistance, output format, processing method, image print size, image print type, image storage device type including on-line storage or disc storage, print modification, annotation, borders, graphics, designated recipient, owner/user, delivery location and address, processing time, concatenating with other images, generation of software or hard display albums, website, payment means including debit card, credit card, and cash, later billing, and credit to account.

The user can communicate with selection area 36 by means of an RF-enabled tag. For example, the user can employ a "loyalty card" comprising an RF tag wherein the RF tag is encoded with user information and preferences, for example, name, address, a preference for 4x6 prints, and/or a preference for an index print. Accordingly, if selection area 36 includes an RF reader, the encoded information can be read/transferred to kiosk 30. Alternatively, such a loyalty card can comprise magnetically encoded information or electrically stored information.

Payment area 38 includes one or more payment mechanisms for accepting payment from the user. One payment mechanism illustrated in Figure 3 is a card reader 62 which includes a slot 64 for accepting a debit/credit card or a keypad 66 for entering a debit/credit cart number. A receipt area 68 can be provided for providing a receipt to the user. Another payment mechanism illustrated in Figure 3, is an alternate payment mechanism 70 configured to accept cash payment or any other form of acceptable payment. A further payment mechanism, not shown, can include a bar-coded or RF-enabled keychain fob (also referred to as a key tag; the MOBIL SPEEDPASS is an example of a RF-enabled key tag).

Delivery area 40 provides a means for delivering the customized imaging product to the user. As shown in Figure 3, delivery area 40 is configured as an opening in display side 34 for accessing the customized imaging product, though other configurations may be known to those skilled in the art.

Input device 41 can comprise a keyboard, as shown in Figure 3, or other input means known to those skilled in the art. For example, display 35 could be employed as an input device if configured as a touchscreen. Other suitable input devices can include a card reader, radio-frequency reader, retinal scan, facial recognition, and a telecommunication device. Input device 41 is employed to obtain information from the user, information such as the user's name, address, telephone number. Input device 41 can be used to communicate with selection area 36.

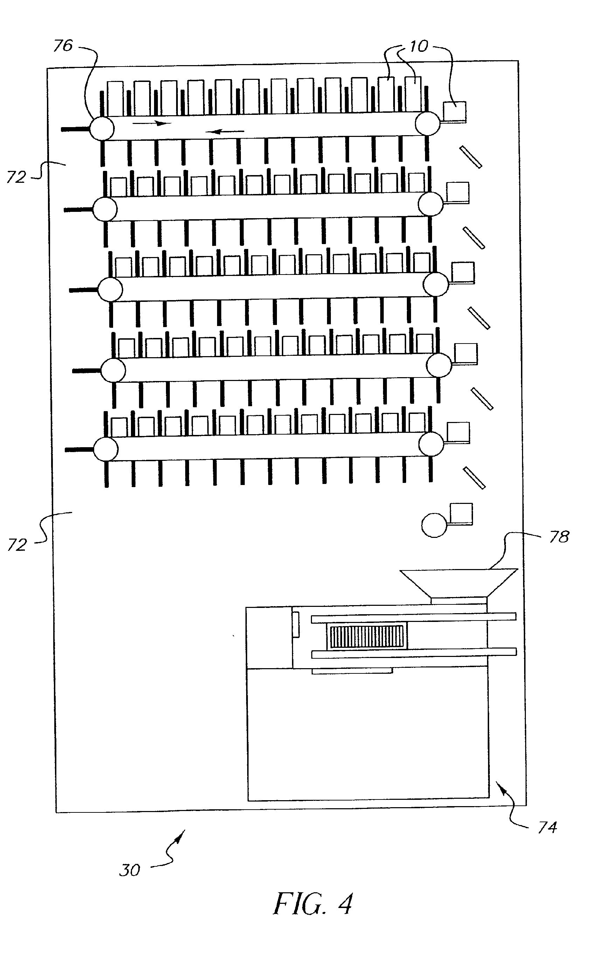

Figure 4 shows a cross-sectional view of kiosk 30 illustrating an exemplary interior of the kiosk. A plurality of cameras 10 are disposed within kiosk 30 in a product area 72 supporting a supply of imaging products (i.e., the cameras). For the arrangement shown in Figure 4, camera 10 is moved, one at a time, from product area 72 to customization area 74 upon activation of kiosk 30, i.e. a user providing payment and making an imaging product selection. For other arrangements known to those skilled in the art, more than one camera 10 can be moved simultaneously. Those skilled in the art will also recognize that various means/methods can be used to move camera 10 from product area 72 to customization area 74. One method, illustrated in Figure 4, employs a movable conveyance illustrated as a conveyor 76 which is incremented a predetermined amount to move one camera 10 from product area 72 to customization area 74. As illustrated in Figure 4, the movement of conveyor 76 causes one camera 10 to leave the conveyor and drop through an opening, shown as a hopper 78, to enter customization area 74.

The specific camera 10 selected for movement to customization area 74 can be dependent on the selections made by the user at selection area 36. For example, if the user selected a camera with a flash, a camera with a flash unit will be moved to customization area 74. Similarly, if the user selected a camera without a flash and having 35mm, 200 speed film, a camera without a flash unit having 35mm, 200 speed film will be moved to customization area 74.

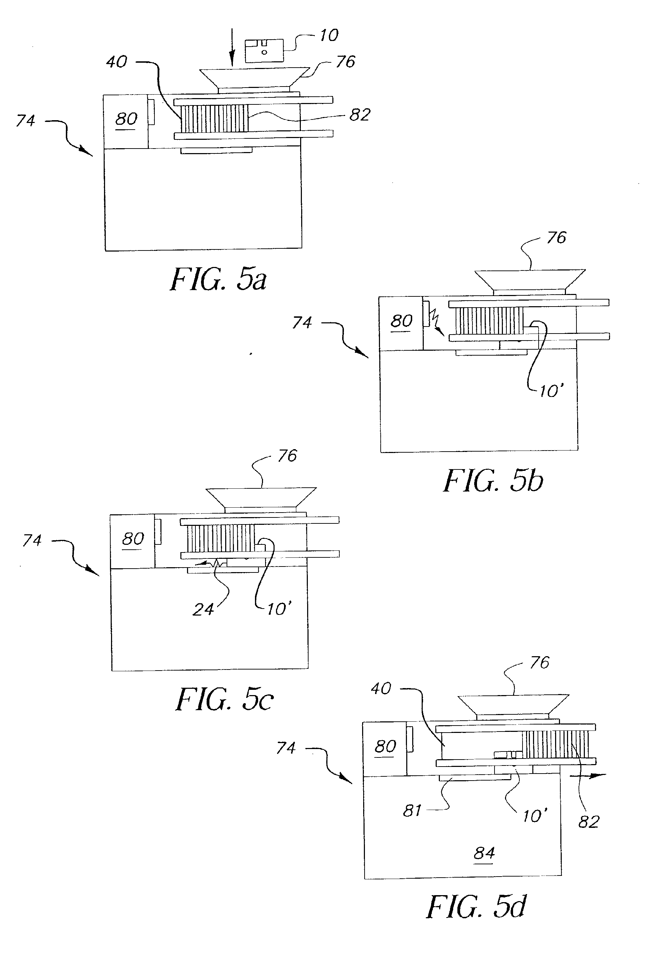

Referring now to Figure 5(a)-5(d), customization area 74 provides means for customizing the imaging product (i.e., camera 10) to generate the customized imaging product. Means for customizing camera 10 comprises a radio frequency communication device 80 for encoding an encodement(s) in transponder 20. Radio frequency communication device 80 comprises transceiver 26 and is adapted to work collaboratively with other components of kiosk 30 and will be described in more detail below.

Figure 5(a) shows camera 10 entering customization area 74 through hopper 76. Customization area 74 can include means (not shown) for detecting the presence/absence of camera 10, such as an IR detector or pressure sensor or the like.

Referring now to Figure 5(b), once at customization area 74, communication device 80 is activated to customize camera 10, whereby encodements specific to the user are encoded in transponder 20 to generate a customized imaging product, referred to as camera 10'. The encodements can include information relating to the user, imaging product, sale of the imaging product, or services related to the imaging product. For example, user information could include name/address/phone number or a designated recipient other than the user. Imaging product information can include camera serial number, date of manufacture, camera functions/features such as shutter speed, zoom and flash, and camera configuration including number of exposures, black/white, color, push process, borders, and/or annotation. Sales information can include sales date, sales location, receipt information such as whether a receipt was provided to the user, and/or payment method. Services information can include the services that were purchased for the camera, including Picture CD, Picture Disk, print and enlargements, digital effects, enhancements and/or modifications (such as sharpening, color changes, custom text and graphics, artifact removal and the like) and/or Photonet Online.

Once camera 10 is encoded to generate customized camera 10', the encodements encoded in transponder 20 can be verified by determining if transponder 20 reacts to a verification signal sent by communication device 80. Transponder 20 reacts (indicated by arrow 24 in Figure 5(c)), responsive to a communication signal generated and the encodement is detected by communication device 80 to determine if the information was properly encoded in transponder 20.

Once encoded and verified, customized camera 10' is presented to the user. In a preferred embodiment, customization area 74 is disposed adjacent to delivery area 40 as illustrated in Figures 5(a)-(d). As such, access to camera 10/10' can be precluded until encodement and verification of transponder 20 has occurred. Access until then can be precluded by means/methods known to those skilled in the art, for example, a door or other covering 82. As illustrated in Figure 5(a), covering 82 is disposed in front of delivery area 40, while in Figure 5(d), covering 82 has been moved away from delivery area 40, thereby allowing access to customized camera 10'. The user is now provided with an imaging product which has been customized to the user's specifications.

An optional door/covering 81 can deliver a defective product to a holding area 84. Examples of defective products which would be delivered to holding area 84 include camera 10 having a non-operable or incorrectly operating transponder 20. Door/covering 81 can also be employed if the user does not remove camera 10' from delivery section 40 within a predetermined time period.

Accordingly, the present invention provides a system for providing a customized imaging product. The system includes an imaging product; input means for providing custom information; means for customizing the imaging product to generate the customized imaging product; and a delivery section for dispensing the customized imaging product.

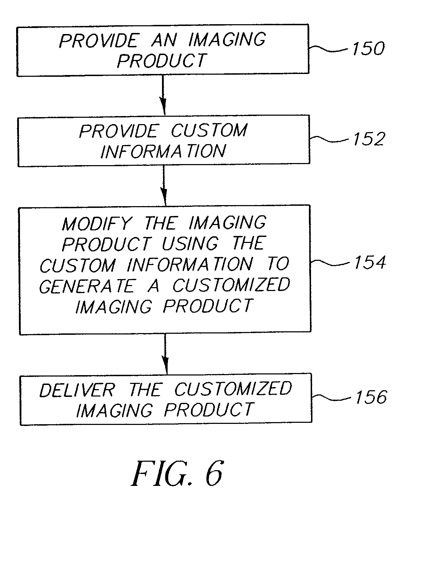

Figure 6 provides a flow diagram of a method in accordance with the present invention for providing the customized imaging product disclosed above. At step 150, an imaging product is provided. Custom information is also provided (step 152). The custom information is used to modify the imaging product to generate a customized imaging product (step 154) which is delivered to a user (step 156).

It may be desirable to transmit the custom information collected at step 152 to a remote location. For example, the payment information using a credit reader 62 can be transmitted so that payment can be verified/obtained. Similarly, the custom information can be used to determine when kiosk 30 needs to be serviced or when kiosk 30 requires stocking of imaging products. Still further, custom information can be used to determine when a predetermined amount/quantity of imaging products have been received at kiosk 30 and collection is required.

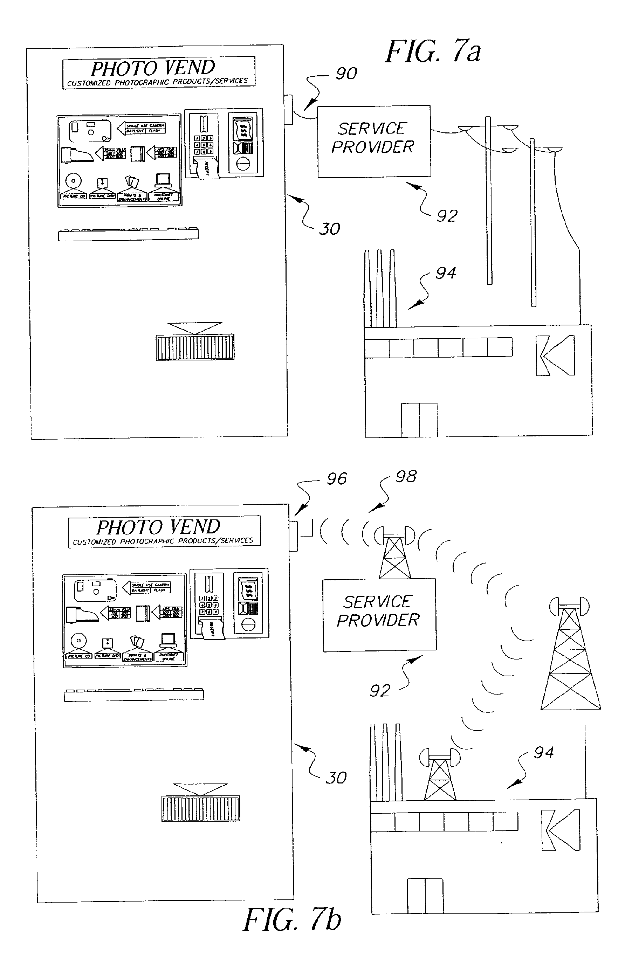

Referring now to Figure 7(a), kiosk 30 can be networked via a communication network 90 to a remote location. The remote location can be a service provider 92, such as an internet service provider or online photofinisher, or a product/service provider 94, such as a wholesale lab, manufacturer, or retailer. Alternatively, as illustrated in Figure 7(b), kiosk 30 can be configured with a wireless communication system 96 for wireless communication 98 to service provider 92 or product/service provider 94. Custom information collected at the remote location can provide a product and service provider with sales and marketing information, allowing a retailer to produce user profiles.

While kiosk 30 has been disclosed as being configured to dispense a customized imaging product, kiosk 30 can be configured to receive the customized imaging product. That is, when the user has exposed the photographic film of camera 10' and desires to have the exposed film of camera 10' developed, kiosk 30 can receive camera 10' and provide the user with a desired output imaging product and/or service.

If kiosk 30 is configured to receive an imaging product, and that imaging product is not previously customized in accordance with the present invention, kiosk 30 can obtain user input and then program encodements in transponder 20 to customize camera 10 at the time it is received at kiosk 30. In this manner, camera 10 can be customized to generate camera 10' whereby a photofinisher receiving camera 10' from kiosk 30 can use the encodements to perform the appropriate customization.

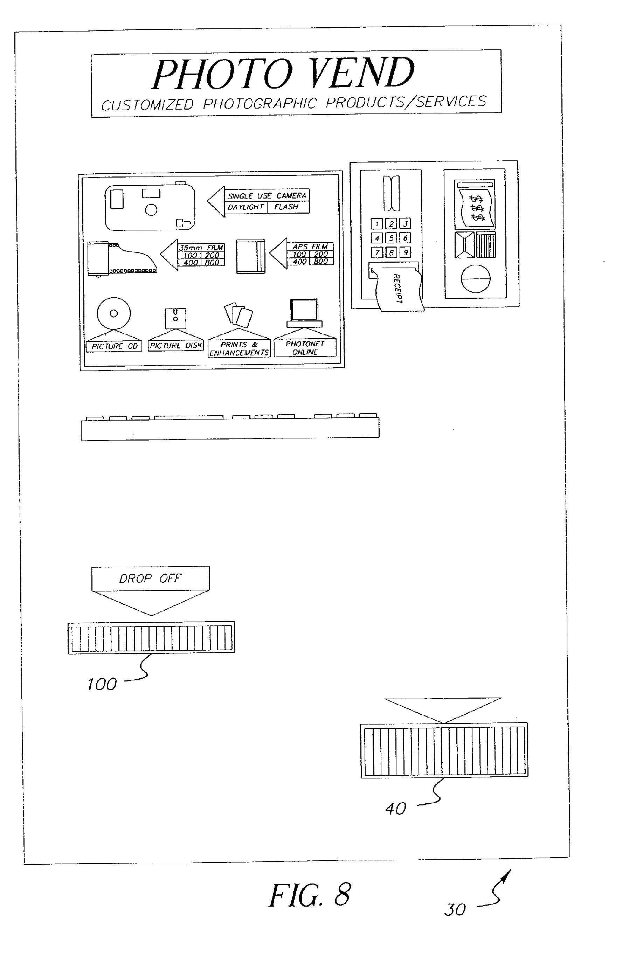

Figure 8 shows kiosk 30 having a receiving area 100 for receiving camera 10', i.e., the customized imaging product. While Figure 8 shows receiving area 100 as being separate and distinct from delivery area 40, those skilled in the art will recognize that receiving area 100 and delivery area 40 can be configured to be the same area. For ease of discussion, receiving area 100 will be shown as being distinct from delivery area 40.

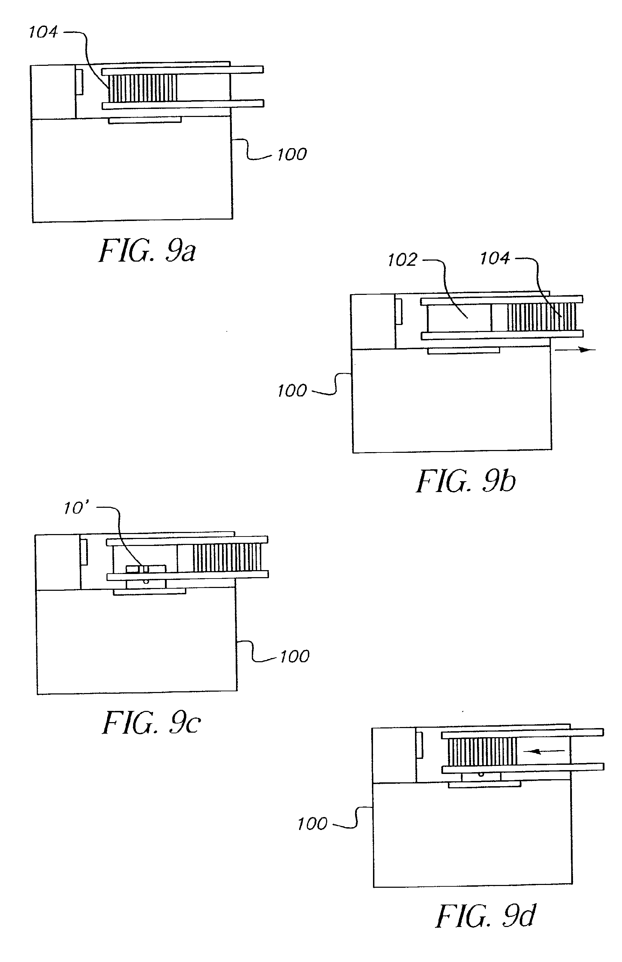

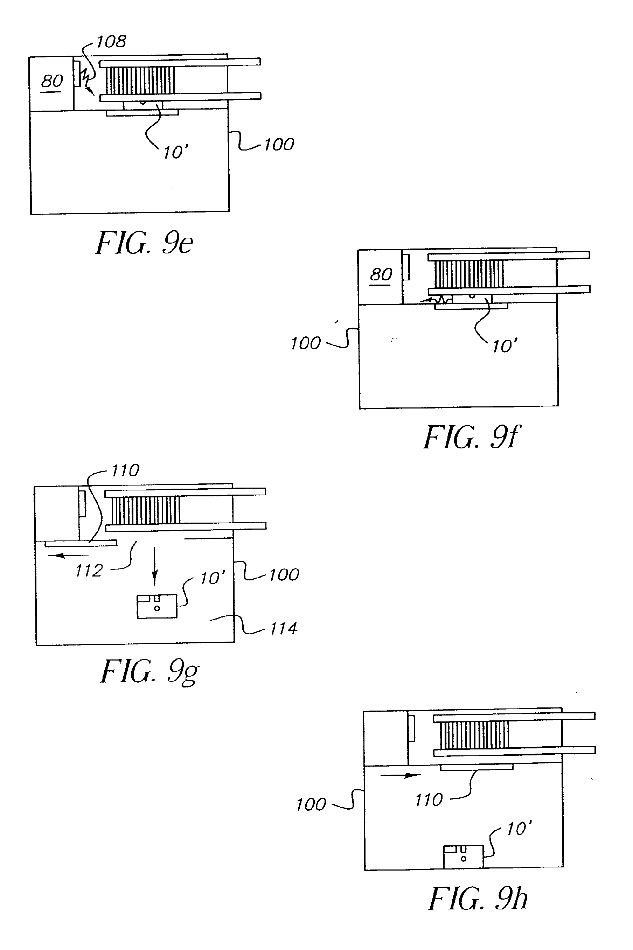

Referring now to Figure 9(a)-(h), there is shown customized camera 10' being received by kiosk 30. Receiving area 100 comprises an opening 102 having a door or covering 104 to preclude access to opening 102. Initially, covering 104 covers opening 102 to prevent kiosk 30 from receiving camera 10', as shown in Figure 9(a), or unauthorized items. Upon activation of kiosk 30 by the user to indicate that customized camera 10' is to be deposited, covering 104 is moved away from opening 102 to expose receiving area 100, as shown in Figure 9(b). (It is noted that activation of kiosk 30 can occur at interaction with payment area 38.) The user places customized camera 10' in receiving area 100 (Figure 9(c)) and covering 104 moves to cover opening 102 to indicate receipt of customized camera 10' (Figure 9(d)).

With door 104 covering opening 102, radio-frequency communication device 80 transmits a radio-frequency field 108 with an appropriate communication signal to access transponder 20 disposed on/within customized camera 10', as shown in Figure 9(e). Referring now to Figure 9(f), the encodements earlier programmed in transponder 20 are transmitted back to communication device 80. If no or incorrect encodements are transmitted to communication device 80, covering 104 can open and a message can be indicated to the user that the item placed in receiving area 100 cannot be accepted/received by kiosk 30. (Other messages can be indicated to the user. For example, alternately, a message can indicate to the user that the encodements can be made at this time.) If the encodements transmitted to communication device 80 are acceptable, customized camera 10' can be accepted by kiosk 30 and placed in a holding area until collected. For example as shown in Figure 9(g), a door or covering 110 can be moved to expose an opening 112 to a holding area 114 for holding customized imaging products received by kiosk 30. Once customized camera 10' is moved to holding area 114, covering 110 is moved back into place, thereby covering opening 112, as shown in Figure 9(h).

Holding area 114 can comprise a plurality of holding sections, bins, or the like, for example, a section for defective products, a section for imaging products submitted by the user which require processing, a section for APS, 35mm, or digital film products, and/or a section for imaging products requiring special handling.

Holding area 114 can comprise a plurality of areas for pre-sorting of customized cameras 10' for processing. For example, one of the plurality of pre-sort areas can be designated for customized cameras 10' requiring an imaging service of prints, while another one of the plurality of pre-sort areas can be designated for customized cameras 10' requiring a imaging service of Picture CDs.

The encodements transmitted from transponder 20 to communication device 80 can be transmitted to service provider 92 or product/service provider 94 by means of communication network 90 or wireless communication system 96 as aforementioned. In particular situations, it may be desirable to verify that the encodements from transponder 20 correspond or are associated with custom information stored at service provider 92 or products/services provider 94. That is, customized camera 10' is transported to holding area 114 only upon verification of the custom information. As such, receiving area 100 is responsive to the input means or payment means.

Holding area 114 can comprise a processor for processing customized camera 10' within kiosk 30. Such processing means are known to those skilled in the art, for example, as disclosed by U.S. Patent No. 5,113,351 *(Bostic).* Alternatively, holding area 114 can comprise a pouch or other container to collect customized camera 10' for transport to a photofinishing lab for processing in accordance with the custom information of customized camera 10'. Still further, holding area 114 can be configured to process specific or unique film types. For example, holding area 114 can be configured to include a thermal processor or scanner. Yet further, holding area 114 can comprise a plurality of transport means, such as pneumatic tubes/cylinders or enclosed conveyors, to transport camera 10' to a designated processing area.

Kiosk 30 can further comprise a service area (not shown) for holding the imaging services associated with customized camera 10' for pick up by the user. That is, if the custom information of customized camera 10' included an imaging service, for example prints, enlargements, or Picture CD, the user can return to kiosk 30 to collect the imaging services selected and paid for. The services area can be configured as a slot in kiosk 30 having an opening from which the user can collect the imaging services. Still further, services area can be delivery section 40; that is, the services purchased by the user can be delivered to the user by means of delivery section 40. Access to the user's imaging services can be obtained, for example, through the inputting of an access code to kiosk 30 using the input means. Another example for obtaining the services is by the use of a "loyalty card" or credit card comprising an RF tag which is read by kiosk 30 and corresponds the user's services with the user for pick-up.

If kiosk 30 comprises a printer, prints and enlargements can be printed on demand at kiosk 30 when the user interacts with the kiosk. The images to be printed can be transmitted to kiosk 30 using communication network 90,98. As such, the user need not return to the same kiosk from where camera 10' was originally purchased or where the user dropped off camera 10' for processing.

The services purchased by the user can be delivered in pouches/packages comprising a radio frequency tag, so as to verify the contents and/or intended recipient.

Accordingly, the present invention provides a system for providing an imaging product and service. The system includes input means for providing custom information; means for associating the custom information with the imaging product to produce a customized imaging product; a delivery section for dispensing the customized imaging product; a receiving area for receiving the customized imaging product; means for identifying the customized imaging product; and means for associating the custom information with the customized imaging product to provide the imaging service.

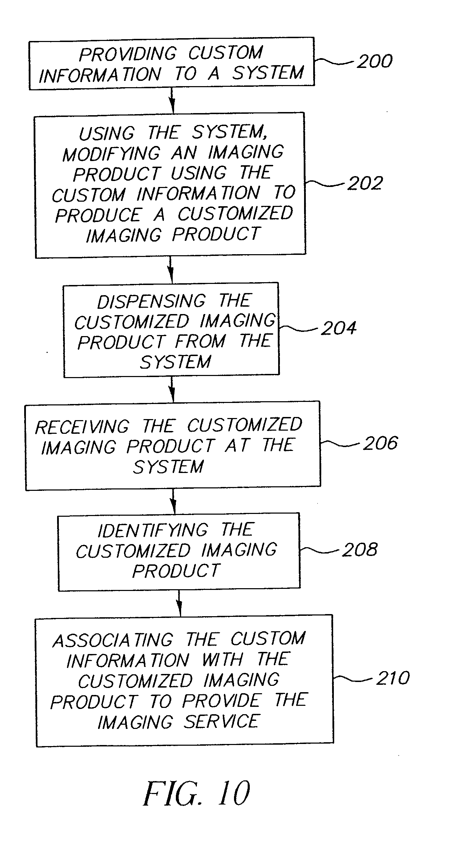

Figure 10 provides a flow diagram of a method in accordance with the present invention for providing the customized imaging product disclosed above. At step 200, custom information provided to a system related to an imaging product and service. Using the system, the imaging product is modified using the custom information to produce a customized imaging product (step 202). The customized imaging product is dispensed from the system (step 204) to a user. Once used by the user, the user returns the customized imaging product to the system, whereby the customized imaging product is received at the system (step 206). The system identifies the customized imaging product which has been received (step 208), whereby the custom information is associated with the customized imaging product to provide the imaging service associated with the customized imaging product (step 210).

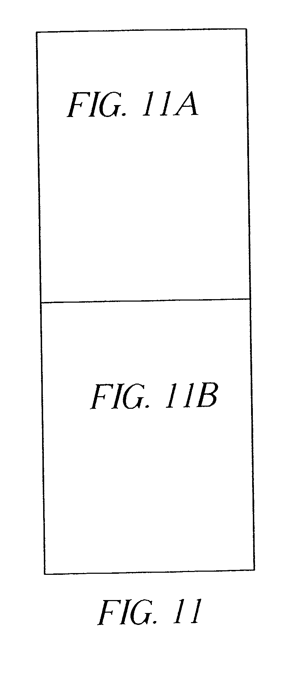

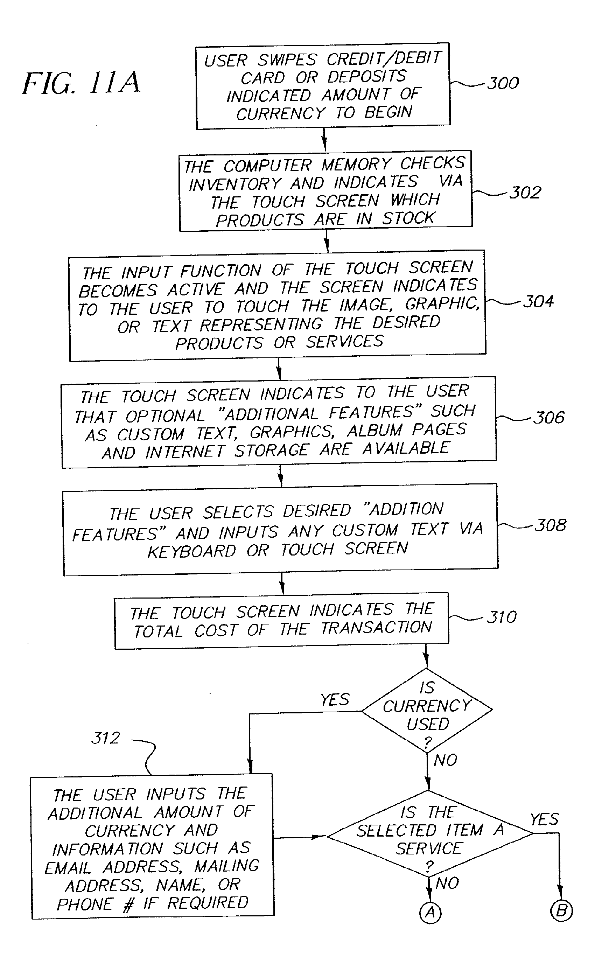

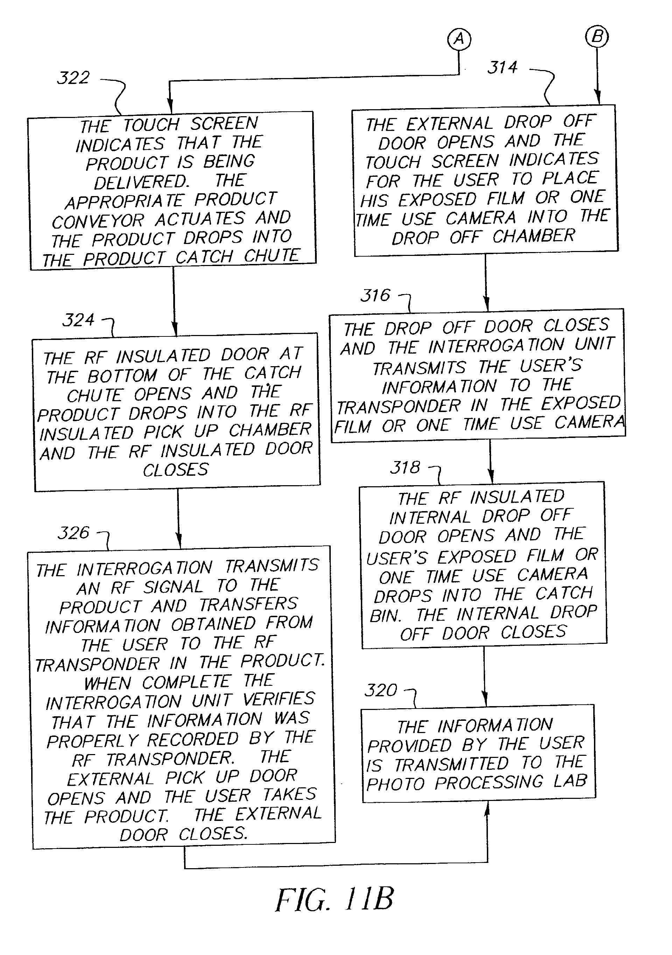

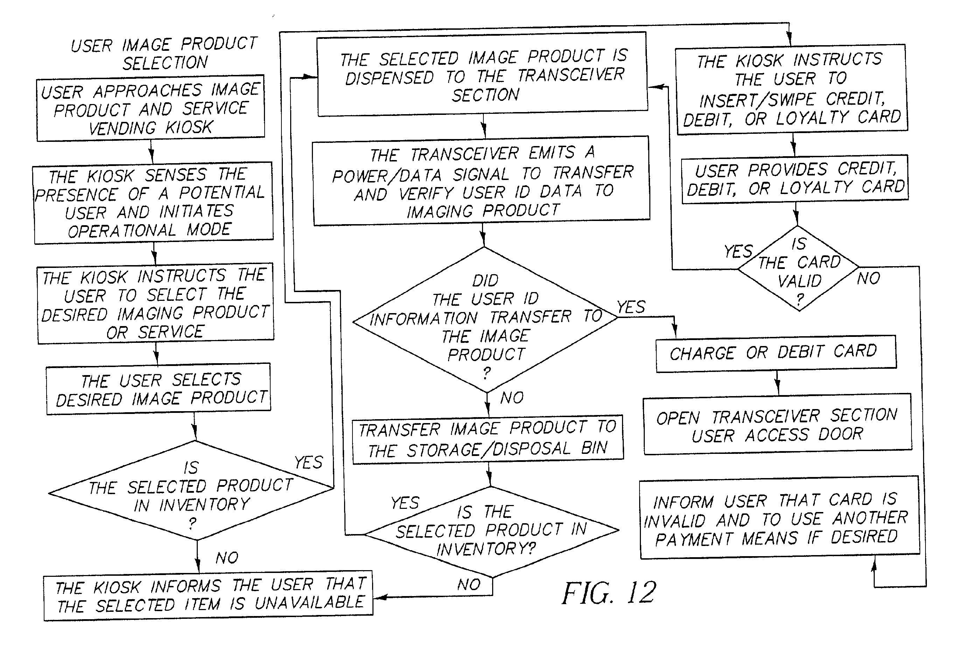

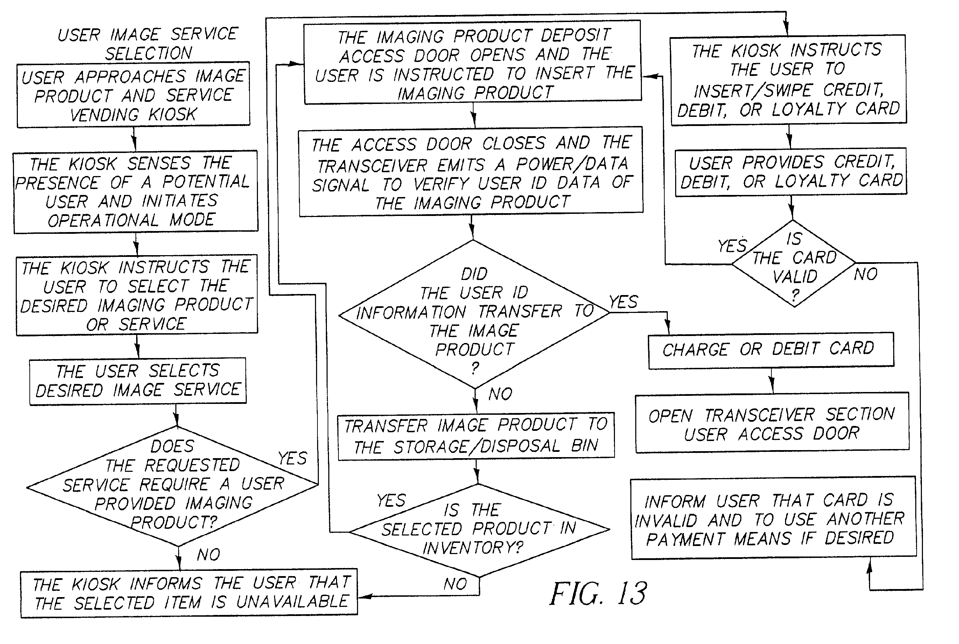

Figure 11 provides a flow diagram of more particularly describing the methods in accordance with the present invention disclosed in Figures 6 and 10. Figure 12 shows a flow diagram more particularly describing the method of selecting an imaging product and the personalization of the imaging product, and Figure 13 shows a flow diagram more particularly describing the method of obtaining the imaging service.

With regard to Figure 11, at step 300, the user initiates interaction with kiosk, for example by providing payment. The supply of products/services which are available for sale is determined (step 302). Instructions can be provided to the user (step 304), whereby the user enters the selections (steps 306 and 308). A total cost of the product/service can be provided to the user (step 310). If currency is used, additional monies may be required (step 312). If the selection is a service(s), the imaging product is received by the kiosk (step 314), and the custom information is read (step 316). The imaging product is then accepted by the kiosk for processing (step 318). If the kiosk is networked, the custom information can be transmitted to a remote location, such as to a photofinishing lab (step 320). If the selection is a product, the appropriate product is transported from the supply area to the encoding area (steps 322 and 324), and the transponder is encoded and the product provided to the user (step 326).

It is noted that the steps as described in Figure 11 may be completed in an alternate arrangement. For example, the flow diagrams of Figures 12 and 13 show payment of the product/service being requested after selection of the product/service.

Accordingly, the present invention comprises an automated film processing capability incorporated into a user-operated, networked, vending machine that dispenses film and cameras as well as photographic services. The photographic services can be provided via the vending machine or ordered from it via the network connection for remote fulfillment. Film and cameras can be individually customized, providing access to a numerous photographic products and services without the requirement of a retail clerk and accessible whenever convenient to the user.

In an alternate embodiment, the means for customizing the imaging product in customization area 74 comprises an indicia writing device, such as a barcode writer, which is well known to those skilled in the art. Accordingly, to customize camera 10, the barcode writer would produce a customized adhesive label comprising the custom information. Portions of the customized adhesive label can be pre-written, while other portions would be written upon activation of kiosk 30. The customized adhesive label would be applied to camera 10 in customization area 74 (using an application device known to those skilled in the art) prior to covering 82 being activated to provide the user access to customized camera 10'. Upon return of the customized camera 10' to kiosk 30, the verification means would comprise a barcode reader or barcode scanner disposed adjacent or within receiving area 100 to read the custom information from the customized adhesive label.

In a further embodiment, the means for customizing the imaging product in customization area 74 comprises communication device 80 and a supply of customizing agents in the form of adhesive-backed transponders adapted to be securely adhered to an imaging product, such as camera 10. (For example, an adhesive can be applied to one side of transponder 20 illustrated in Figure 1.) Accordingly, to customize camera 10, communication device 80 would encode encodements in at least one of the supply of adhesive-backed transponders. Then, the encoded customizing agent would be provided to the user for adhesion (by the user) to camera 10 to generate customized camera 10'. Or alternatively, the encoded customizing agent can be automatically applied within kiosk 30 to camera 10 to generate customized camera 10'. Further, the transponder can be applied to the camera 10 in manufacture, and the pre-applied transponder can be encoded using kiosk 30. Accordingly, upon returning camera 10' to the kiosk or a photofinishing outlet, the transponder can be removed from camera 10' and affixed to a photofinishing envelope, thereby providing photofinishing/services instructions to a photofinisher.

It is noted that the present invention is not limited to the customization of a product to be dispensed from kiosk 30. In a similar embodiment to that described above, the means for customizing the imaging product comprises communication device 80 and a supply of customizing agents in the form of adhesive-backed transponders adapted to be securely adhered to an existing imaging product which is not necessarily dispensed by kiosk 30. Accordingly, to customize an existing image product, communication device 80 encodes the encodements in at least one of the adhesive-backed transponder from the supply. Then, the encoded customizing agent is provided to the user for adhesion to the existing imaging product, which could have been in the user's possession prior to interaction with kiosk 30. In this manner, kiosk 30 produces a customizing agent, i.e., the encoded transponder, which when applied to an existing imaging product, creates a custom image product according to the provided custom information.

In a preferred embodiment, it is desired to provide a plurality of cameras 10 having the same or associated encodements (e.g., a sequence of encodements, credit card number, time/date of purchase, location of purchase, identification, concatenation of sequence and fixed id number) so that any resulting customized cameras 10' are associated. Accordingly, any imaging services provided would maintain the association. For example, a number of cameras may be purchased for a single event such as a wedding. The cameras would be associated by comprising a sequence (e.g., 1 of 10, 2 of 10, etc) and/or a single identification number shared by all the cameras. Thereafter, all the services (e.g., images) could be combined for delivery to the user, for example, provided on a single CD or photo album, or floppy disk. Multiple versions/copies of this service could be made available to a plurality of customers.

In yet a further embodiment, non-traditional or special films can be employed to produce images, for example, by processing with heat or with viscous developers. U.S. Patent No. 6,369,873 (Levy) , commonly assigned and incorporated herein by reference, describes a thermal processing kiosk for processing thermal film. Polachrome Instant Slide Film, manufactured by the POLAROID CORPORATION, produces images with viscous developers. An example of an integrated processor/scanner system is described in U.S. Patent No. 5,627,016 (Manico), commonly assigned and incorporated herein by reference. Still further, traditional or conventional films can be processed with non-standard, variant processes, such as the Konica QD-21 process manufactured by KONICA CORPORATION, or simple, less complex methods which provide rapid access to images when compared to conventional film processes such as the Kodak C-41 process. However, variant processes and special films typically produce images that are incompatible with optical, analog printing techniques. Digital scanning and image processing algorithms provide a means to obtain high quality images from special films and conventional films that have been processed by non-standard means. With the use of special films or conventional films with variant processes, images can be accessed more quickly than with conventional means, perhaps reducing processing time by at least 80%. Also, with digital scanning and image processing, high quality images can be obtained and because the images are digital, they can be conveniently stored, transmitted, and edited in a kiosk/vending machine self service environment.

Accordingly, kiosk 30 can dispense imaging products comprising traditional films and/or non-traditional (i.e., special) films. Further, kiosk 30 can accept/receive imaging products comprising traditional films and/or non-traditional films.

Kiosk 30 can comprise a system for processing the imaging product received by the kiosk, whether the imaging product comprises traditional or non-traditional film. For example, if the imaging product is traditional film, kiosk 30 can comprise an automated vending system such as disclosed in U.S. Patent No. 5,113,351 (Bostic). If the imaging product is non-traditional film, such as thermal film disclosed in U.S. Patent No. 6,369,873 (Levy), kiosk 30 can comprise a thermal processor and scanner to process an exposed thermal film.

In such a manner, the service(s) can be provided "on-site" at kiosk 30. That is, the user can wait while the processing of the product/service is being conducted, or return (either after a short period of time or at a later time) to retrieve the product/service ordered from the kiosk. As aforementioned, in addition to hardcopy prints, the product/service can include the writing of CDs, memory cards, DVD, digital prints, enlargements, index prints, and floppy disks.

Accordingly, display 35 of kiosk 30 can display one or more of the user's images which have been processed by kiosk 30, or downloaded to kiosk 30 over the communication network from a remotely located kiosk. The displayed images can be a thumbnail display (i.e., low resolution), a high resolution display, or a thumbnail display of a plurality of images (e.g., an index print). In addition, kiosk 30 can be employed to modify an image display on display 30 (e.g., zoom, crop) as is known to those skilled in the art, such as the Kodak Picture Maker.

Yet further, if kiosk 30 is networked over a communication network, the user can direct kiosk 30 to send/transfer/transmit the order to a second kiosk for pick up of the order at the second kiosk. Alternatively, one or more images could be sent from kiosk 30 via email or "instant messaging" to the second kiosk. In addition, the first kiosk can direct the services to another location, such as a fulfillment center or a home computer.

Kiosk 30 can be located at private and public places, for example, stadiums, airport terminals, bus stations, train stations, schools, and office buildings. If located at an airport terminal, kiosk 30 can be used by travelers concerned with the sensitivity of photographic film to x-rays and gamma rays. That is, there is a concern that photosensitive films, particularly high speed films, may be adversely affected by the x-rays of security screening devices employed to scan luggage. Film will not be exposed to security x-rays if not carried through a security gate. Accordingly, a user/traveler can purchase a photosensitive product (such as a single-use-camera or film) from kiosk 30 located at the airport of the traveler's destination, wherein kiosk 30 is located outside of the secured area. After taking pictures to expose the film, the traveler can return the camera/film to kiosk 30 located at the airport terminal outside the secured area. Alternatively, the traveler can return the camera/film to another kiosk located at a different location, for example, at a car rental location or a museum (i.e., any compatible kiosk). The traveler can wait for the processed images, or the traveler can provide instructions for transmitting/sending the images to another location for pickup, for example, the next destination of the traveler or the traveler's home.

## Claims

1. A system for generating a customized imaging product, comprising:
input means for providing custom information;
means for customizing an imaging product to generate the customized imaging product in accordance with the custom information; and
a delivery section for dispensing the customized imaging product.

2. The system of Claim 1, wherein the input means for providing custom information is a keyboard, touch screen, card reader, RF reader, retinal scan, facial recognition, or a telecommunication device.

3. The system of Claim 1, wherein the means for customizing the imaging product comprises an indicia writing device or a radio frequency communication device.

4. A system for generating a customized imaging product, comprising:
a product area adapted to support a plurality of imaging products;
a selection area for providing custom information;
a customization area adapted to customize at least one of the plurality of imaging products in accordance with the custom information to generate the customized imaging product; and
a delivery section for dispensing the customized imaging product to a user.

5. The system of Claim 4, wherein each of the plurality of imaging products comprises a radio-frequency identification transponder disposed on or within the imaging product; and the customization area comprises a radio-frequency device for encoding the custom information in the radio-frequency identification transponder to generate the customized imaging product.

6. The system of Claim 4, wherein the customization area comprises:
a barcode writer for encoding the custom information on an adhesive label to generate a customized adhesive label; and
an application device for applying the customized adhesive label to the at least one of the plurality of imaging products to generate the customized imaging product.

7. A system for dispensing an imaging service, comprising:
a receiving area adapted to receive a customized imaging product having a radio-frequency identification transponder disposed on or within the customized imaging product, the radio-frequency identification transponder being encoded with custom information;
a radio-frequency device for determining the custom information from the radio-frequency identification transponder; and
a processor for processing the customized imaging product in accordance with the custom information to generate the imaging service.

8. A method for providing an imaging product and service, comprising the steps of:
providing the imaging product;
providing custom information;
modifying the imaging product using the custom information to generate a customized imaging product;
dispensing the customized imaging product;
receiving the customized imaging product;
identifying the customized imaging product; and
associating the custom information with the customized imaging product to provide the imaging service.

9. A method for dispensing an imaging product service comprising the steps of:
receiving a customized imaging product having a radio-frequency identification transponder disposed on or within the customized imaging product, the radio-frequency identification transponder being encoded with custom information;
determining the custom information from the radio-frequency identification transponder; and
processing the customized imaging product in accordance with the custom information to generate the imaging service.

10. A method for placing a photofinishing order of a customer for photofinishing goods or services, comprising the steps of:
providing a kiosk for allowing entry of the order;
providing a supply of radio-frequency identification transponders;
transferring the order to at least one of the radio-frequency identification transponders to create an encoded radio-frequency identification transponder;
providing a photofinishing envelope; and
placing the encoded radio-frequency identification transponder on a photofinishing envelope.
